Europäisches Patentamt

(19) European Patent Office

Office européen des brevets

(11) **EP 0 870 189 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(51) Int Cl.[7]: **G01N 21/64**, G01K 11/32

(21) Anmeldenummer: **96944654.1**

(86) Internationale Anmeldenummer:
**PCT/EP96/05832**

(22) Anmeldetag: **23.12.1996**

(87) Internationale Veröffentlichungsnummer:
**WO 97/24606 (10.07.1997 Gazette 1997/30)**

(54) **OPTISCHE TEMPERATURSENSOREN UND OPTRODEN MIT OPTISCHER TEMPERATURKOMPENSATION**

OPTICAL TEMPERATURE SENSORS AND OPTICAL-CHEMICAL SENSORS WITH OPTICAL TEMPERATURE COMPENSATION

SONDES DE TEMPERATURE OPTIQUES ET OPTRODES (DETECTEURS OPTO-CHIMIQUES) A COMPENSATION OPTIQUE DE LA TEMPERATURE

(84) Benannte Vertragsstaaten:
**AT DE FR GB**

(30) Priorität: **27.12.1995 DE 19548922**

(43) Veröffentlichungstag der Anmeldung:
**14.10.1998 Patentblatt 1998/42**

(73) Patentinhaber: **Max-Planck-Gesellschaft zur Förderung der Wissenschaften e.V.**
**80539 München (DE)**

(72) Erfinder:
• **KLIMANT, Ingo**
  **D-93051 Regensburg (DE)**
• **HOLST, Gerhard**
  **D-28237 Bremen (DE)**

(74) Vertreter: **Weiss, Wolfgang, Dipl.-Chem. Dr. et al**
**Weickmann & Weickmann**
**Patentanwälte**
**Postfach 86 08 20**
**81635 München (DE)**

(56) Entgegenhaltungen:
**EP-A- 0 357 586**     **US-A- 4 895 156**

• **THE ANALYST, Bd. 118, April 1993, CAMBRIDGE, GB, Seiten 385-388, XP000618792 B.D.MACCRAITH ET AL.: ""Fibre Optic Oxygen Sensor Based on Fluorescence Quenching of Evanescent-wave Excited Ruthenium Complexes in Sol-Gel Derived Porous Coatings" in der Anmeldung erwähnt**
• **PROCEEDINGS SPIE: CHEMICAL, BIOCHEMICAL, AND ENVIRONMENTAL FIBER SENSORS IV, Bd. 1796, September 1992, BOSTON,US, Seiten 71-75, XP000618801 J.N.DEMAS ET AL.: "On the Design of Luminescence Based Temperature Sensors" in der Anmeldung erwähnt**

**Beschreibung**

Die vorliegende Erfindung betrifft optische Temperatursensoren und Optroden mit optischer Temperaturkompensation.

Die Bestimmung von chemischen Parametern, z.B. des Partialdrucks von Gasen wie etwa Sauerstoff, Kohlendioxid, Ammoniak, des pH-Werts, der Konzentration von gelösten ionischen Verbindungen etc., durch optisch-chemische Sensoren (Optroden) ist bekannt. Diese Optroden besitzen ebenso wie elektrochemische Sensoren ein temperaturabhängiges Ansprechverhalten. Aus diesem Grund erfordert die praktische Anwendung solcher Sensoren eine gleichzeitige Messung der Probentemperatur und der Temperatur in der chemisch-sensitiven Schicht. Derzeit werden für diesen Zweck fast ausschließlich elektrische Temperaturfühler eingesetzt. Damit geht jedoch ein großer Vorteil von Optroden, in elektromagnetischen Felder eingesetzt werden zu können, verloren. Weiterhin kann in vielen Fällen die Kombination eines optischen chemischen Sensors mit einem elektrischen Temperaturfühler den Herstellungsprozeß der Optrode aufwendiger gestalten, womit der Vorteil einer Anwendung als billiger Wegwerfsensor in Frage gestellt wird. Überdies ist eine Temperaturkompensation der Messung mit elektrischen Temperaturfühlern in manchen Fällen überhaupt nicht zu realisieren.

Bisher wurden nur wenige Versuche beschrieben, die Temperaturkompensation auf optischem Wege zu realisieren. Die israelische Patentanmeldung IL-A-96 100 beschreibt ein Verfahren zur Bestimmung eines Gases, Dampfes oder eines in einer flüssigen Probe gelösten Gases unter Verwendung eines Zwei-Sensor-Systems. Der erste Sensor ist ein chemischer Sensor, der ein fluoreszierendes Reagenz enthält und in Kontakt mit dem Meßmedium steht. Der zweite Sensor ist ein Referenzsensor, der dasselbe fluoreszierende Reagenz in einer vom Meßmedium isolierten Form enthält.

Das US-Patent US-A-5 115 811 offenbart einen faseroptischen Sensor zur Bestimmung eines Parameters in einem Meßmedium, der einen chemischen Sensor mit einer Farbstoffzusammensetzung enthält, deren optische Eigenschaften in Korrelation zu Änderungen des zu bestimmenden Parameters stehen. Der Sensor ist an eine Lichtquelle und an eine Vorrichtung zur Messung von Licht bei drei unterschiedlichen Wellenlängen gekoppelt. Die erste Wellenlänge wird derart gewählt, daß die optischen Eigenschaften des Farbstoffs bei Änderungen des zu bestimmenden Parameters im wesentlichen konstant bleiben. Die zweite und dritte Wellenlänge werden derart gewählt, daß optische Eigenschaften des Farbstoffs sich in Korrelation mit Änderungen des zu bestimmenden Parameters und auch als Funktion der Temperatur ändern. Das bei drei Wellenlängen gemessene Licht wird zur Bestimmung der Temperatur des Meßmediums ausgewertet, um eine Temperaturkompensation des zu bestimmenden Parameters zu erreichen.

Beide oben genannten Verfahren haben jedoch den Nachteil, nur bestimmte Temperatureffekte zu kompensieren, da sie nicht die Möglichkeit der absoluten Temperaturmessung bieten.

Das österreichische Patent AT-B-393 326 betrifft ein Verfahren zur quantitativen Bestimmung zumindest eines Parameters in einer flüssigen oder gasförmigen Probe, wobei die nach Fluoreszenzanregung emittierte Fluoreszenzstrahlung in einer mit der Probe in Direkt- oder Diffusionskontakt stehenden Indikatorsubstanz gemessen wird, wobei die Änderung eines ersten zu messenden Parameters aus der Änderung des Verhältnisses zweier, bei unterschiedlichen Wellenlängen des Anregungs- oder Emissionsspektrums der Indikatorsubstanz bestimmter Intensitätswerte und die Änderung eines zweiten Parameters aus der Änderung der Abklingzeit der Fluoreszenzstrahlung derselben Indikatorsubstanz aus der Gruppe der aromatischen Kohlenwasserstoffe, der aromatischen Heterozyklen und der metallorganischen Komplexe gewonnen wird. Der Nachteil dieses Verfahrens besteht darin, daß aufgrund der Verwendung einer einzigen Indikatorsubstanz für die Bestimmung von zwei Parametern keine unabhängigen Meßsignale für diese beiden Parameter erhalten werden können. Folglich ist keine spektrale Trennung und auch keine gleichzeitige Messung der Abklingzeit von zwei Parametern möglich. Aufgrund der Tatsache, daß der gemäß AT-B-393 326 verwendete Indikator mit dem Meßmedium in Kontakt steht, können außerdem bei einer Temperaturbestimmung aufgrund von Wechselwirkungen zwischen Bestandteilen des Mediums mit dem Indikator Verfälschungen nicht ausgeschlossen werden. Diese Nachteile führen in der Praxis dazu, daß der in AT-B-393 326 beschriebene Sensor für eine temperatur-kompensierte Messung chemischer Parameter nur sehr begrenzt tauglich ist.

DE-C-32 13 183 betrifft eine Anordnung zur optischen Bestimmung von physikalischen und chemischen Parametern eines Meßobjekts mit einer Lichtmeßeinrichtung mit mindestens einer Strahlungsquelle, einem Monochromator, einem Lichtempfänger und einer Anzeigevorrichtung und mindestens einem durch eine semipermeable Membran gegenüber dem Meßobjekt abgegrenzten Indikatorraum, der einen auf die zu bestimmenden physikalischen oder chemischen Parameter mit einer spektralen Änderung reagierenden Indikator enthält, wobei das Absorptionsvermögen und die Schichtdicke des Indikators derart gewählt sind, daß der dem Meßobjekt angrenzende Teil der Membran vom Prüflicht nicht erreichbar ist. Die Anordnung kann auch Nanokapseln als sekundäre Indikatorräume enthalten, die auf eine oder mehrere weitere physikalische oder chemische Parameter mit einer spektralen Änderung reagierende Indikatoren aufweisen. Als Beispiele für Indikatoren in den Nanokapseln werden Flüssigkristalle genannt, die sich bei Temperaturänderungen in ihrer Farbe ändern. Die Verwendung von Indikatoren, die in einer gegenüber dem Medium inerten Form vorliegen und eine temperaturabhängige Abklingzeit oder/und Intensität der Lumineszenz aufweisen, wird in DE-C- 32 13 183 nicht offenbart.

Es existieren einige optische Temperatursensoren auf der Basis temperaturabhängiger Lumineszenzabklingzeit von Kristallen oder Phosphoren. Diese optischen Temperatursensoren wurden jedoch bisher noch nicht in Kombination mit chemischen Optroden verwendet.

Lumineszierende metallorganische Verbindungen, z.B. Rutheniumkomplexe mit heterocyclischen Stickstoffliganden, sind als Sauerstoffindikatoren für Optroden bekannt (vgl. z.B. Wolfbeis et al., Mikrochim. Acta (Vienna) 1986, III, 359-366; Bacon und Demas, Anal. Chem. 1987, 59, 2780-2785; Carraway et al., Anal. Chem. 1991, 63, 337-342; McGraith et al., Analyst 1993, 118, 385-388). Die prinzipielle Verwendung von lumineszierenden Rutheniumkomplexen als Temperaturindikatoren wurde bereits von Demas et al, Proc. SPIE 1992, Vol. 1796, 71-75, vorgeschlagen. Diese Publikation enthält jeodch keinen Hinweis, daß auf diese Weise eine Referenzierung des Temperatureinflusses von Optroden möglich ist.

Eine der vorliegenden Erfindung zugrunde liegende Aufgabe bestand darin, die Nachteile der im Stand der Technik bekannten Methoden zur Temperaturmessung und zur temperaturkompensierten Bestimmung chemischer Parameter mindestens teilweise zu beseitigen. Insbesondere sollte ein Verfahren zur temperaturkompensierten Bestimmung von Parametern bereitgestellt werden, das auf einfache Weise auch in Gegenwart starker elektromagnetischer Felder durchführbar ist.

Die der Erfindung zugrunde liegende Aufgabe wird gelöst durch eine Vorrichtung zur temperaturkompensierten Bestimmung von chemischen Parametern, umfassend:

> einen optischen Temperatursensor, der einen Temperaturindikator mit einer temperaturabhängigen Abklingzeit oder/und Intensität der Lumineszenz in einer gegenüber dem umgebenden Medium inerten Form enthält;
> einen chemischen Sensor, der einen gegenüber einem chemischen Parameter empfindlichen Indikator enthält;
> Mittel zur Lumineszenzanregung des Temperaturindikators und des chemischen Indikators;
> Mittel zur Messung der Lumineszenz des Temperaturindikators und des chemischen Indikators;
> Mittel zur optischen Verbindung zwischen Indikator, Anregungsmitteln und Meßmitteln und
> Mittel zur Detektion von Lumineszenzstrahlung.

Als Temperaturindikator wird ein vorzugsweise lumineszierender Metallkomplex mit einer temperaturabhängigen Abklingzeit oder/ und Intensität der Lumineszenz verwendet. Der lumineszierende Metallkomplex ist vorzugsweise ein Komplex eines Seltenerde- oder Übergangsmetalls mit organischen Liganden. Besonders bevorzugt weist der Metallkomplex die allgemeine Formel (I) auf:

$$M^{n+} (L_1 L_2 L_3) X^{n-} \qquad (I)$$

worin M ein Metallkation ausgewählt aus Seltenerde- und Übergangsmetallen ist, n 2 oder 3 ist; $L_1$, $L_2$ und $L_3$ gleich oder verschieden sind und Liganden mit mindestens 2 stickstoffhaltigen Heterocyclen bedeuten, die über Stickstoffatome an das Metallkation gebunden sind, und X eine oder mehrere negativ geladene Gruppen bedeutet.

Das Metallkation ist vorzugsweise Ruthenium, Osmium, Rhenium, Iridium, Rhodium, Platin, Palladium, Molybdän und Chrom. Besonders bevorzugt sind Ruthenium, Iridium, Rhenium, Chrom und Osmium. Am meisten bevorzugt ist Ruthenium.

Die Liganden $L_1$, $L_2$ und $L_3$ sind Liganden mit mindestens 2 stickstoffhaltigen Heterocyclen. Bevorzugt sind aromatische Heterocyclen, wie z.B. Bipyridyl, Bipyrazyl, Terpyridyl und Phenanthrolin. Besonders bevorzugt werden die Liganden $L_1$, $L_2$ und $L_3$ aus Bipyridyl- und Phenanthrolin-Ringsystemen ausgewählt.

Weiterhin enthält der Metallkomplex eine negativ geladene Gruppe. Die negativ geladene Gruppe kann Bestandteil eines Liganden sein, oder als freies Gegenion vorliegen. Beispiele für geeignete negativ geladene Gruppen sind Gegenionen wie etwa Perchlorat, organische Sulfate, z.B. Laurylsulfat, und organische Carboxylate.

Besonders bevorzugt ist der temperaturindikator ein Ruthenium (II)-tris-1,10-phenanthrolin-Komplex, ein Ruthenium (II)-tris-4,7-diphenyl-1,10-phenanthrolin-Komplex oder ein Ruthenium (II)-tris-2,2'-bipyridyl-Komplex.

Anstelle von lumineszierenden Metallkomplexen können auch andere temperatursensitive Materialien verwendet werden, z.B. Chrom-(III)-YAG, Alexandrit oder mit Mangan dotiertes Magnesium-Fluorgermanat. Bei diesen Materialen handelt es sich um phosphoreszierende Feststoffe, die pulverisiert und in einer den chemischen Sensor enthaltenden Matrix dispergiert werden können. Ein Nachteil dieser Materialien gegenüber den fluoreszierenden Metallkomplexen besteht darin, daß sich keine transparenten, dünnen Schichten als Grundierung für andere Optroden herstellen lassen. Außerden ist die Lumineszenzintensität aufgrund schwacher Lichtabsorption im allgemeinen nicht sehr hoch.

Der Temperaturindikator muß in einer gegenüber dem umgebenden Medium inerten Form vorliegen, um eine ausreichend geringe Querempfindlichkeit gegenüber chemischen Parametern, wie etwa pH, Sauerstoff oder ionischen Verbindungen aufzuweisen. In einer ersten Ausführungsform der vorliegenden Erfindung kann der Temperaturindikator in einer festen Matrix, z. B. einer optisch-transparenten Polymerschicht immobilisiert sein. Die feste Matrix kann beispielsweise durch Aufbringen einer Mischung von einem Polymer, z.B. Polyvinylchlorid, Polyvinylidenchlorid, Polymethylmethacrylat oder einem Glas, dem gelösten Indikator und einem Lösungsmittel auf ein Substrat, wie etwa eine Lichtleitfaser oder eine transparente Folie, und anschließendes Verdunsten des Lösungsmittels hergestellt werden. Die Schichtdicke der Matrix beträgt vorzugsweise 1 μm bis 20 μm und besonders bevorzugt 2 μm bis 10 μm.

Andererseits kann der Temperaturindikator jedoch auch in einem Gefäß eingeschlossen sein, z.B. in einer Glasmikrokapillare mit einer nahe am Ende der Kapillare befestigten optischen Faser. In der Kapillare kann der Indikator in gelöster Form vorliegen.

Der erfindungsgemäße optische Temperatursensor zeigt vorzugsweise eine temperaturabhängige Änderung in der Lumineszenzquantenausbeute oder/und in der Lumineszenzabklingzeit mit vernachlässigbarer Quersensitivität gegenüber Sauerstoff und anderen chemischen Parametern. Der Sensor ist in einem Temperaturbereich zwischen -50°C und +50°C, insbesondere -20°C bis +50°C einsetzbar und kann mit üblichen Verfahren auf einfache Weise hergestellt werden.

Vorzugsweise wird der Temperaturindikator so gewählt, daß die Lumineszenzabklingzeit einen Temperaturkoeffizienten im Bereich von 5 bis 100 ns, besonders bevorzugt 10 bis 50 ns pro °C aufweist.

Der erfindungsgemäße Sensor ermöglicht aufgrund der Verwendung von mindestens zwei verschiedenen Indikatoren, von denen einer in einer in einer gegenüber dem umgebenden Medium inerten Form vorliegt und zur Temperaturmessung dient, eine unabhängige Messung der Temperatur innerhalb des- Sensors. Dies ist ein entscheidender Vorteil gegenüber den aus dem Stand der Technik bekannten optischen Sensoren sowie gegenüber den derzeit gebräuchlichen Thermoelementen, die insbesondere bei Messungen in der Gasphase und hoher Lichtintensität zu Fehlern aufgrund von Heizeffekten neigen können. Darüber hinaus ist mit dem erfindungesgemäßen Sensor erstmals ein Imaging, d. h. eine flächenmäßige Messung möglich. Dieses Imaging kann innerhalb eines lateralen Bereichs von mehreren Quadratzentimetern bis Quadratmetern, z. B. 10 x 5 cm erfolgen. Hierzu konnten bisher nur IR-Kameras eingesetzt werden, die für diesen Zweck zu ungenau sind. Das Imaging kann vor allem in der Medizin, z. B. zur Messung von Tumorgewebe (Tumoroxigenierung) und zur Messung von transplantiertem Gewebe (Vitalität) eingesetzt werden. Allgemein eignen sich die erfindungsgemäßen Sensoren für alle natürlichen Systeme, bei denen Temperaturheterogenitäten auftreten können.

Ein weiterer Vorteil des erfindungsgemäßen Sensors besteht darin, daß er mit Halbleiterbauteilen kompatibel ist. Als Mittel zur Lumineszenzanregung des Metallkomplexes werden daher vorzugsweise eine oder mehrere Elektrolumineszenz-Dioden und als Detektor eine oder mehrere Photodioden verwendet. Die Mittel zur optischen Verbindung zwischen Indikator, Anregungsmitteln und Meßmitteln umfassen vorzugsweise Lichtleitfasern, z.B. Quarzglasfasern. Gegebenenfalls kann der optische Temperatursensor noch eine optische Abschirmung enthalten, um mögliche Störungen von Licht aus dem Meßmedium auszuschließen. Die Messung des Signals erfolgt durch ein geeignetes Detektionssystem, mit dem die temperaturabhängige Lumineszenzabklingzeit bzw. Intensität z.B. durch eine Phasenmodulationstechnik bestimmt wird.

Vorzugsweise wird der erfindungsgemäße Temperatursensor mit einem chemischen Sensor kombiniert, der einen optisch-chemischen Indikator enthält. Diese Kombination einer Optrode mit einem optischen Temperatursensor kann verwendet werden, um bei einer Optrode die Temperatur direkt in der sensitiven Schicht zu messen, und auf diese Weise eine Temperaturkompensation durchzuführen.

In einer Ausführungsform der vorliegenden Erfindung sind der Temperaturindikator und der chemische Indikator in unterschiedlichen festen Matrices immobilisiert, so daß beispielsweise ein Zweischicht-Sensor aus einer temperatursensitiven und einer chemisch-sensitiven Schicht vorliegt. Die temperatursensitive Schicht ist derart ausgebildet, daß sie keine Querempfindlichkeit zu chemischen Parametern des Meßmediums aufweist, wohingegen die chemisch-sensitive Schicht gegenüber einem Parameter des Meßmediums, z.B. Sauerstoff, empfindlich ist. Das Temperatur- und das chemische Signal können durch entsprechende Detektorvorrichtungen spektral getrennt aufgezeichnet oder zeitlich getrennt aufgelöst werden. Die Temperaturmessung kann mittels Bestimmung der Lumineszenzabklingzeit erfolgen und wird deshalb von Filtereffekten nicht beeinflußt, die durch Veränderungen der optischen Eigenschaften in der chemisch-sensitiven Schicht hervorgerufen werden können. Da die Absorption von Licht in der temperatursensitiven Schicht keinen nennenswerten Temperaturkoeffizienten aufweist, wird auch das Meßsignal des chemischen Sensors nicht beeinflußt.

Andererseits können der Temperaturindikator und der chemische Indikator auch in der gleichen festen Matrix immobilisiert sein, so daß man einen Einschicht-Sensor erhält. Bei dieser Ausführungsform der vorliegenden Erfindung wird der Temperaturindikator vorzugsweise in einer gegenüber dem Meßmedium inerten Form innerhalb der den chemischen Indikator enthaltenden Matrix dispergiert.

Indikatoren für die chemisch-sensitive Schicht sind bekannt, z.B. polycyclische aromatische Kohlenwasserstoffe oder Übergangsmetall-Komplexe, wie sie auch überraschenderweise für die erfindungsgemäße Temperaturbestimmung geeignet sind. Im Gegensatz zur temperaturempfindlichen Schicht ist die chemisch-sensitive Schicht jedoch so ausgestaltet, daß sie einen Kontakt des Meßmediums mit dem Indikator ermöglicht, wobei aufgrund einer Korrelation zwischen der Lumineszenzintensität des chemischen Indikators und dem zu bestimmenden Parameter ein Meßsignal erhalten wird.

Erfindungsgemäße Vorrichtungen, welche eine temperaturkompensierte optische Bestimmung von Parametern erlauben, können auf einfache Weise hergestellt werden, z.B. durch Aufbringen einer oder mehrerer temperatur- oder/und chemisch-sensitiver Schichten auf ein Substrat, z.B. durch Spin Coating, Eintauchbeschichtung, Siebdruck etc.

Vorzugsweise ist die erfindungsgemäße Vorrichtung derart ausgebildet, daß Temperaturindikator und chemischer Sensor in direkten Kontakt mit dem Meßmedium gebracht werden können. Auf diese Weise kann eine höhere Meßgenauigkeit und somit eine verbesserte Temperaturkompensation erreicht werden.

Vorzugsweise werden als Temperaturindikator und als chemischer Sensor Substanzen verwendet, die bei unterschiedlichen Wellenlängen Lumineszenzstrahlung emittieren. Die erfindungsgemäße Vorrichtung ist somit vorzugsweise derart ausgebildet, daß die Mittel zur Lumineszenzanregung zur Abstrahlung von Licht mit unterschiedlichen Wellenlängen vorgesehen sind. Ein Beispiel für geeignete Lumineszenzanregungsmittel ist somit eine Kombination von zwei oder mehr Elektrolumineszenz-Dioden. Als Detektionsmittel werden vorzugsweise zwei oder mehrere Photodetektoren mit verschiedenen Emissionsfiltern verwendet, welche einen separaten Nachweis der vom Temperaturindikator bzw. vom chemischen Indikator stammenden Lumineszenzstrahlung ermöglichen.

Außerdem betrifft die vorliegende Erfindung ein Verfahren zur temperaturkompensierten Bestimmung von chemischen oder physikalischen Parametern wobei man einen gegenüber einem bestimmten chemischen Parameter des Meßmediums empfindlichen Indikator in Kombination mit einem gegenüber chemischen Parametern des Mediums weitgehend unempfindlichen, lumineszierenden Temperaturindikator verwendet und die von beiden Indikatoren stammenden Signale auswertet, dadurch gekennzeichnet, daß man einen optischen Temperaturindikator, vorzugsweise einen lumineszierenden Metallkomplex verwendet, der eine temperaturabhängige Abklingzeit oder/und Intensität der Lumineszenz aufweist.

Das erfindungsgemäße Verfahren kann auch als flächenmäßige Bestimmung, d. h. als Imaging, vorzugsweise über einen Flächenbereich von mindestens 1 cm$^2$, besonders bevorzugt von 2- 200 cm$^2$ durchgeführt werden.

Dieses Verfahren kann insbesondere in den Bereichen Medizin, Biologie oder Umwelttechnik verwendet werden, beispielsweise zur Bestimmung von Gasen, wie $O_2$, $CO_2$, $NH_3$, etc., des pH-Wertes oder gelöster ionischer Verbindungen.

Als chemischen Sensor verwendet man vorzugsweise eine Optrode. Bei gleichzeitiger optischer Bestimmung der Temperatur und eines chemischen oder physikalischen Parameters kann das Verfahren auch in Gegenwart elektromagnetischer Felder ohne Störung durchgeführt werden.

Fig. 1 zeigt ein Beispiel für eine erfindungsgemäße Vorrichtung zur temperaturkompensierten Bestimmung chemischer Parameter unter Verwendung eines erfindungsgemäßen Temperaturindikators und eines optischen chemischen Indikators.

Fig. 2 zeigt ein Beispiel für einen Sensor, der gleichzeitig einen Temperaturindikator und einen chemischen Indikator enthält.

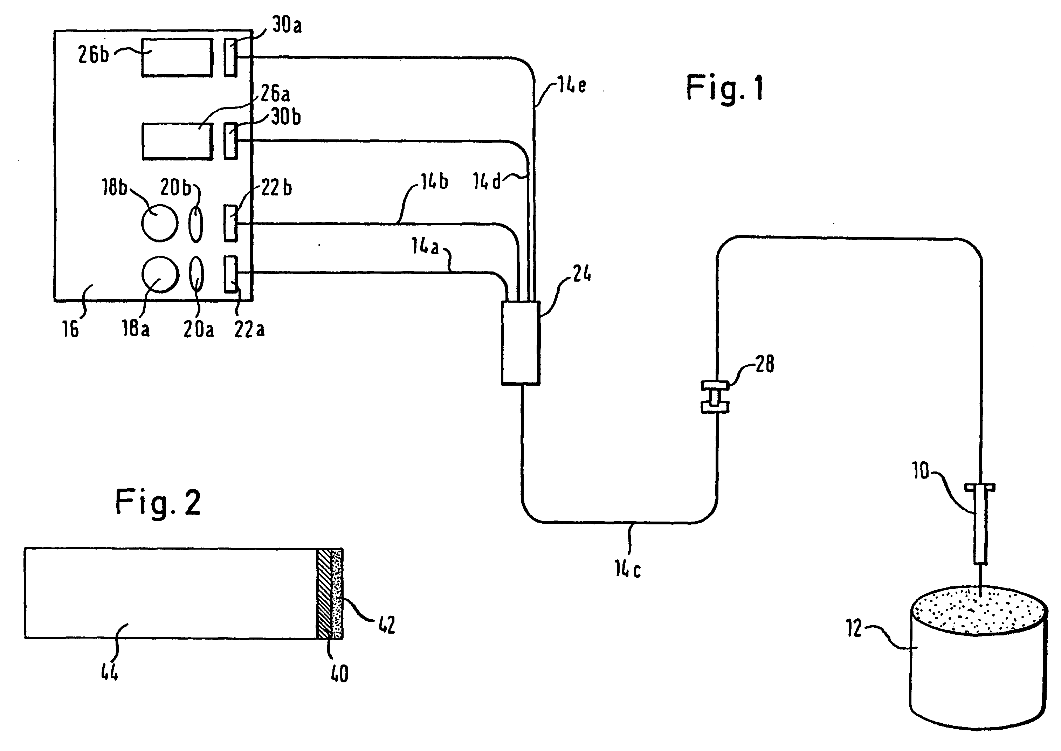

In Fig. 1 ist eine kombinierte temperatursensitive und chemisch-sensitive Mikrooptrode (10) in ein Meßmedium (12), z.B. einen Sedimentkern, eingetaucht. Die Mikrooptrode ist über optische Fasern (14) mit einem Lumineszenzanregungs- und -detektionssystem (16) verbunden. Dieses System enthält zwei LED (18a; 18b), z.B. eine blaue und gelbe LED, mit Linsen (20a; 20b) und optischen Filtern (22a; 22b), die zur Erzeugung von Licht mit jeweils einer für die Lumineszenzanregung des Temperaturindikators und des chemischen Indikators geeigneten Wellenlänge dienen. Elektrolumineszenz-Dioden sind bevorzugte Lichtquellen, da sie gegenüber anderen Lichtquellen, wie etwa Lasern oder Halogen- oder Xenonlampen die Vorteile eines geringen Preises, einer geringen Größe, eines geringen Stromverbrauchs und einer vernachlässigbaren Wärmeerzeugung aufweisen.

Darüber hinaus kann das durch eine LED emittierte Licht auf einfache Weise elektronisch moduliert werden.

Das Licht von den LED (18a; 18b) wird durch die optischen Linsen (20a; 20b) gebündelt und durch die Glasfilter (22a; 22b) in einen Faserkoppler (24), z.B. einen 1x4 Faserkoppler, geleitet. Dieser Faserkoppler dient zur Auftrennung des in die Probe geleiteten Anregungslichts von dem aus der Probe zurückgestrahlten Lumineszenzsignal.

Zwei Faserkanäle (14a; 14b) dienen zur Leitung des von den LED erzeugten Lichts in den Faserkoppler (24). Anschließend wird das Licht über den Faserkanal (14c) zum Mikrosensor (10) geleitet, um dort die Lumineszenz von Temperaturindikator und chemischem Indikator anzuregen. Der Faserkanal (14c) kann eine Faserkupplung (28) enthalten.

Das Lumineszenzsignal aus dem Mikrosensor (10) wird wieder zurück durch den Faserkanal (14c) in den Faserkoppler (24) und von dort über zwei weitere Faserkanäle (14d; 14e) zu zwei Photodetektoren (26a; 26b) geleitet, in denen das Meßsignal empfangen wird. Die Photodetektoren (26a; 26b) sind mit verschiedenen Emissionsfiltern (30a; 30b) versehen, um einen separaten Nachweis der vom Temperaturindikator stammenden Lumineszenzstrahlung und der vom chemischen Indikator stammenden Lumineszenzstrahlung zu ermöglichen.

Die Auswertung des Signals erfolgt vorzugsweise in einer elektronischen Steuerungs- und Signalverstärkungseinrichtung. Von dort kann das Signal auf ein Aufzeichnungsgerät gegeben werden.

Fig. 2 zeigt ein Beispiel für einen Mikrosensor, der gleichzeitig einen Temperaturindikator und einen chemischen Indikator enthält. Der Sensor ist ein Zweischichten-Sensor, der eine temperatursensitive Schicht (40) mit dem Temperaturindikator und eine chemisch sensitive Schicht (42) mit dem chemischen Indikator enthält. Für die optische Verbindung mit einer Lichtquelle und einem Detektor sorgt ein Lichtleiter (44).

Die folgenden Beispiele sollen die Erfindung näher erläutern.

**BEISPIEL 1**

Herstellung von Temperaturindikatoren

1.1. Ruthenium (Phenanthrolin)$_3$ (Laurylsulfat)$_2$
200 mg Ruthenium(II)-tris-1,10-Phenanthrolin-Dichlorid (Ru(phen)$_3$Cl$_2$) von Aldrich (Steinheim, DE) wurden in 100 ml destilliertem Wasser gelöst. Nach Zugabe von 50 ml einer Lösung von 10 mmol/l Natriumlaurylsulfat in Wasser wurde ein feindispergiertes Präzipitat erhalten. Dann wurden 20 ml einer 1 mol/l Natriumchloridlösung zugegeben und das Präzipitat nach 3 h abfiltriert. Der resultierende Komplex wurde mit destilliertem Wasser und Diethylether gewaschen und anschließend für 24 h unter Vakuum bei 30°C getrocknet. Der Indikator wurde als orangefarbenes Puffer in einer Ausbeute von 80 bis 85 % erhalten.

1.2 Ruthenium(4,7-Diphenyl-1,10-phenanthrolin)$_3$-(Dilaurylsulfat)$_2$
225,9 mg RuCl$_3 \cdot$ 3 H$_2$O (Aldrich) wurden in einer Mischung von 5 ml Ethylenglykol und 0,5 ml Wasser bei 120°C gelöst. Dann wurden 862,6 mg 4,7 Diphenyl-1,10-phenanthrolin (dpp) (Aldrich) zugegeben. Die Mischung wurde für 45 min. unter Rückfluß auf 165°C erhitzt. Nach dem Abkühlen wurde die Lösung in 50 ml Aceton aufgenommen, filtriert und mit Aceton verdünnt. Das Filtrat enthält das Rohprodukt Ru (dpp)$_3$Cl$_2$. 100 ml einer 10 mmol/l wässrigen Lösung von Natriumlaurylsulfat wurden zu 100 ml des Filtrats gegeben.
Schließlich wurden 100 ml einer 1 mol/l Natriumchloridlösung zugegeben. Das orangefarbene Präzipitat wurde filtriert und 4 mal mit destilliertem Wasser gewaschen. Eine weitere Reinigung erfolgte durch Umkristallisation aus einem Aceton-Wasser-Gemisch (80/20, V/V). Dann wurde das Präzipitat mit Diethylether gewaschen und bei 40°C unter Vakuum getrocknet. Das Produkt wurde als orangefarbenes Pulver in einer Ausbeute von 75 bis 85 % erhalten.

**BEISPIEL 2**

Die Herstellung der temperatursensitiven Schicht erfolgt durch Auftragen einer Mischung aus einer polymeren Matrix, dem gelösten Indikator und einem Lösungsmittel auf ein Substrat, z.B. eine Lichtleitfaser oder eine transparente Folie, und anschließendes Verdunsten des Lösungsmittels.

Auf diese Weise wurde ein Ruthenium (II)-tris-1,10-Phenanthrolin-Dilaurylsulfat-Temperaturindikator in einer PVC-Matrix mit einer Schichtdicke von 5 μm hergestellt. Der Indikator liegt im Polymer gelöst vor, oder die Sensorschicht ist völlig transparent.

Der Sensor zeigt keine Querempfindlichkeit gegenüber chemischen Parametern, wie pH-Wert, Sauerstoff, ionische Verbindungen etc. Der Temperaturkoeffizient der Lumineszenzabklingzeit beträgt ca. 25 ns pro °C oder 2,5 % pro °C. Der Temperaturindikator ist stark lumineszierend und mit Halbleiterbauelementen kompatibel.

**BEISPIEL 3**

Kombination eines Temperaturindikators und eines chemisch-optischen Indikators.

Es wurde ein optischer Sauerstoffsensor mit intrinsischer Temperaturkompensation in Form eines Zweischicht-Sensors hergestellt. Die erste Schicht ist eine temperatursensitive Schicht, wie in Beispiel 2 beschrieben. Die zweite Schicht ist eine sauerstoffsensitive Schicht mit einem phosphoreszierenden Platin-Porphyrin-Komplex, gelöst in Polystyrol.

Beide Meßsignale können spektral getrennt nachgewiesen und ausgewertet werden. Die Messung erfolgt sowohl über die Lumineszenzabklingzeit als auch über die Lumineszenzintensität.

**Patentansprüche**

1. Vorrichtung zur temperaturkompensierten Bestimmung von chemischen Parametern, umfassend:

- einen optischen Temperatursensor, der einen Temperaturindikator mit einer temperaturabhängigen Abklingzeit oder/und Intensität der Lumineszenz in einer gegenüberdem umgebenden Medium inerten Form enthält; einen chemischen Sensor, der einen gegenüber einem chemischen Parameter empfindlichen Indikator enthält;

- Mittel zur Lumineszenzanregung des Temperaturindikators und des chemischen Indikators;
- Mittel zur Messung der Lumineszenz des Temperaturindikators und des chemischen Indikators;
- Mittel zur optischen Verbindung zwischen Indikator, Anregungsmitteln und Meßmitteln und
- Mittel zur Detektion von Lumineszenzstrahlung.

2. Vorrichtung nach Anspruch 1,
   **dadurch gekennzeichnet,**
   **daß** der optische Temperatursensor einen Metallkomplex umfaßt, der insbesondere die allgemeine Formel (I) aufweist:

$$M^{n+} (L_1 L_2 L_3) X^{n-} \qquad (I)$$

worin M ein Metallkation ausgewählt aus Seltenerde- und Übergangsmetallen ist, n 2 oder 3 ist;
$L_1$, $L_2$ und $L_3$ gleich oder verschieden sind und Liganden mit mindestens 2 stickstoffhaltigen Heterocyclen bedeuten, die über Stickstoffatome an das Metallkation gebunden sind, und
X eine oder mehrere negativ geladene Gruppen bedeutet.

3. Vorrichtung nach Anspruch 2,
   **dadurch gekennzeichnet,**
   **daß** das Metallkation Ruthenium ist.

4. Vorrichtung nach einem der Ansprüche 2-3,
   **dadurch gekennzeichnet,**
   **daß** die Liganden des Metallkomplexes aus stickstoffhaltigen aromatischen Heterocyclen insbesondere aus Bipyridyl-, Bipyrazyl-, Terpyridyl- und Phenanthrolin-Ringsystemen ausgewählt sind.

5. Vorrichtung nach einem der Ansprüche 2-4,
   **dadurch gekennzeichnet,**
   **daß** die negativ geladenen Gruppen aus Perchlorat, organischen Sulfaten und organischen Carboxylaten ausgewählt sind.

6. Vorrichtung nach einem der Ansprüche 1-5,
   **dadurch gekennzeichnet,**
   **daß** der Temperaturindikator einen Ruthenium (II)-tris-1,10-phenanthrolin-Komplex, einen Ruthenium (II)-tris-4,7-diphenyl-1,10-phenanthrolin-Komplex oder einen Ruthenium (II)-tris-2,2'-bipyridyl-Komplex enthält.

7. Vorrichtung nach einem der Ansprüche 1-6,
   **dadurch gekennzeichnet,**
   **daß** der optische Temperatursensor eine temperaturabhängige Abklingzeit der Lumineszenz insbesondere im Bereich von -50°C bis +50°C aufweist.

8. Vorrichtung nach Anspruch 7,
   **dadurch gekennzeichnet,**
   **daß** die Lumineszenzabklingzeit des Temperaturindikators einen Temperaturkoeffizienten im Bereich von 5 bis 100 ns pro °C aufweist.

9. Vorrichtung nach einem der Ansprüche 1-8,
   **dadurch gekennzeichnet,**
   **daß** der optische Temperatursensor eine temperaturabhängige Lumineszenzquantenausbeute aufweist.

10. Vorrichtung nach einem der Ansprüche 1-9,
    **dadurch gekennzeichnet,**
    **daß** die Mittel zur Lumineszenzanregung des Temperaturindikators mindestens eine Elektrolumineszenz-Diode, die Mittel zur Messung der Lumineszenzabklingzeit mindestens eine Photodiode oder/und die Verbindungsmittel Lichtleitfasern umfassen.

11. Vorrichtung nach einem der Ansprüche 1-10,
    **dadurch gekennzeichnet,**
    **daß** der Temperaturindikator in einer festen Matrix, insbesondere einer optisch transparenten Polymerschicht, immobilisiert ist.

12. Vorrichtung nach einem der Ansprüche 1-11,
    **dadurch gekennzeichnet,**
    **daß** der Temperaturindikator in einem Gefäß, insbesondere einem Mikrokapillargefäß, eingeschlossen ist.

13. Vorrichtung nach einem der Ansprüche 1-12,
    **dadurch gekennzeichnet,**
    **daß** der chemische Sensor eine Optrode mit einem optischen chemischen Indikator umfaßt.

14. Vorrichtung nach Anspruch 13,
    **dadurch gekennzeichnet,**
    **daß** der Temperaturindikator und der chemische Indikator in unterschiedlichen festen Matrices oder in der gleichen festen Matrix immobilisiert sind.

15. Vorrichtung nach Anspruch 14,
    **dadurch gekennzeichnet,**
    **daß** der Temperaturindikator in einer gegenüber dem Meßmedium inerten Form innerhalb der den chemischen Indikator enthaltenden Matrix dispergiert ist.

16. Verfahren zur temperaturkompensierten Bestimmung von chemischen Parametern, wobei man einen gegenüber einem bestimmten chemischen Parameter des Meßmediums empfindlichen Indikator in Kombination mit einem gegenüber chemischen Parametern des Mediums weitgehend unempfindlichen, lumineszierenden Temperaturindikator verwendet und die von beiden Indikatoren stammenden Signale auswertet,
**dadurch gekennzeichnet,**
**daß** man einen optischen Temperaturindikator verwendet, der eine temperaturabhängige Abklingzeit oder/ und Intensität der Lumineszenz aufweist.

17. Verfahren nach Anspruch 16,
**dadurch gekennzeichnet,**
**daß** man ein Gas, den pH-Wert oder gelöste ionische Verbindungen bestimmt.

18. Verfahren nach Anspruch 17,
**dadurch gekennzeichnet,**
**daß** $O_2$ bestimmt.

19. Verfahren nach einem der Ansprüche 16-18,
**dadurch gekennzeichnet,**
**daß** man als chemischen Indikator eine Optrode verwendet.

20. Verfahren nach einem der Ansprüche 16-19,
**dadurch gekennzeichnet,**
**daß** man die Bestimmung in Gegenwart elektromagnetischer Felder durchführt.

21. Verfahren nach einem der Ansprüche 16-20
**dadurch gekennzeichnet,**
**daß** man ein flächenmäßige Bestimmung durchführt.

**Claims**

1. A device for the temperature-compensated determination of chemical parameters, comprising;

   - an optical temperature sensor which contains a temperature indicator that has a temperature-dependent afterglow time and/or luminous intensity and does not react with the surrounding medium;
   - a chemical sensor which contains an indicator that is sensitive to a chemical parameter;
   - means for stimulating the temperature indicator and the chemical indicator to luminesce;
   - means for measuring the luminescence of the temperature indicator and the chemical indicator,
   - means for establishing an optical connection between indicator, excitation device and measuring equipment and
   - means for detecting luminous radiation.

2. The device of claim 1,
   wherein
   the optical temperature sensor comprises a metal complex having, in particular, the general formula (I):

$$M^{n+} (L_1 L_2 L_3) X^{n-} \qquad (I),$$

   where M is a metal cation selected from the rare earths and transition metals, n is 2 or 3, $L_1$, $L_2$ and $L_3$ are the same or different and stand for ligands with at least two nitrogenous heterocyclic compounds which are connected to the metal cation via nitrogen atoms, and X stands for one or more negatively charged groups.

3. The device of claim 2,
   **wherein**
   the metal cation is ruthenium.

4. Device according to one of claims 2-3,
   **wherein**
   the ligands of the metal complex are selected from nitrogenous aromatic heterocyclics, in particular from bipyridyl, bipyrazyl, terpyridyl and phenanthroline ring systems.

5. Device according to one of claims 2-4,
   **wherein**
   the negatively charged groups are selected from perchlorate, organic sulfates and organic carboxylates.

6. Device according to one of claims 1-5,
   **wherein**
   the temperature indicator contains a ruthenium (II)-tris-1,10-phenanthroline complex, a ruthenium (II)-tris-4,7-diphenyl-1,10-phenanthroline complex or a ruthenium (II)-tris-2,2'-bipyridyl complex.

7. Device according to one of claims 1-6,
   **wherein**
   the optical temperature sensor exhibits a temperature-dependent afterglow time in the range from -50°C to + 50°C.

8. The device of claim 7,
   **wherein**
   the afterglow time of the temperature indicator has a temperature coefficient in the range from 5 to 100 ns per °C.

9. Device according to one of claims 1-8,
   **wherein**
   the optical temperature sensor has a temperature-dependent quantum yield.

10. Device according to one of claims 1-9,

**wherein**

the means for stimulating the temperature indicator to luminesce comprises at least one electroluminescent diode, the means for measuring the afterglow time comprises at least one photodiode and/or the connection means comprises optical fibers.

11. Device according to one of claims 1-10,
**wherein**
the temperature indicator is immobilized in a solid matrix, in particular an optically transparent polymer film..

12. Device according to one of claims 1-11,
**wherein**
the temperature indicator is enclosed in a vessel, in particular a microcapillary vessel.

13. Device according to one of claims 1-12,
**wherein**
the chemical sensor comprises an optrode with an optical-chemical indicator.

14. The device of claim 13,
**wherein**
the temperature indicator and the chemical indicator are immobilized in different solid matrices or in the same solid matrix.

15. The device of claim 14,
**wherein**
the temperature indicator, in a form which is inert towards the measuring medium, is dispersed within the matrix containing the chemical indicator.

16. A method for the temperature-compensated determination of chemical parameters, in which an indicator that is sensitive towards a certain chemical parameter of the measuring medium is used together with a luminescent temperature indicator that is largely insensitive towards chemical parameters of the medium, and the signals produced by the two indicators are evaluated,
**wherein**
use is made of an optical temperature indicator which has a temperature-dependent afterglow time and/or luminous intensity.

17. The method of claim 16,
wherein
a gas, the pH or dissolved ionic compounds are determined.

18. The method of claim 17,
**wherein**
$O_2$ is determined.

19. Method according to one of claims 16-18,

**wherein**

an optrode is used as chemical indicator.

20. Method according to one of claims 16-19,
**wherein**
analysis is carried out in the presence of electromagnetic fields.

21. Method according to one of claims 16 to 20,
**wherein**
an areal analysis is carried out.

**Revendications**

1. Dispositif pour la détermination, à compensation thermique, de paramètres chimiques, comprenant:

   - un capteur optique de température, qui contient un indicateur de température présentant une durée de décroissance et/ou une intensité de la luminescence qui dépendent de la température, dans une forme inertie vis-à-vis du milieu environnant; un capteur chimique, qui contient un indicateur sensible à un paramètre chimique;
   - des moyens d'excitation de la luminescence de l'indicateur de température et de l'indicateur chimique;
   - des moyens pour mesurer la luminescence de l'indicateur de température et de l'indicateur chimique;
   - des moyens pour établir la liaison optique entre un indicateur, des moyens d'excitation et des moyens de mesure, et
   - des moyens pour détecter le rayonnement de luminescence.

2. Dispositif selon la revendication 1, **caractérisé en ce que** le capteur optique de température comprend un complexe métallique, qui possède notamment la forme générale (I):

$$M^{n+} (L_1 L_2 L_3) X^{n-} \qquad (I)$$

M étant un cation métallique choisi parmi les métaux de terres rares et des métaux de transition, et n étant égal à 2 ou 3;
$L_1$, $L_2$ et $L_3$ étant égaux ou différents et désignant des ligands comportant au moins 2 hétérocycles contenant de l'azote, qui sont liés au cation métallique au moyen d'atomes d'azote, et
X désignant un ou plusieurs groupes chargés négativement.

3. Dispositif selon la revendication 2, **caractérisé en**

**ce que** le cation métallique est du ruthénium.

4. Dispositif selon l'une des revendications 2 à 3, **caractérisé en ce que** les ligands du complexe métallique sont choisis parmi des hétérocycles aromatiques contenant de l'azote, notamment à partir de systèmes de noyaux de bipyridyle, de bipyrazyle, de terpyridyle et de phénanthroline.

5. Dispositif selon l'une des revendications 2 à 4, **caractérisé en ce que** les groupes chargés négativement sont choisis parmi le perchlorane, les sulfates organiques et des carboxylates organiques.

6. Dispositif selon l'une des revendications 1 à 5, **caractérisé en ce que** l'indicateur de température est un complexe ruthénium (II)-tris-1,10-phénanthroline, un complexe ruthénium (II)-tris-4,7-diphényl-1,10-phénanthroline ou un complexe ruthénium (II)-tris-2,2'-bipyridyle.

7. Dispositif selon l'une des revendications 1 à 6, **caractérisé en ce que** le capteur optique de température possède une durée de décroissance, qui dépend de la température, de la luminance, se situant notamment dans la gamme de -50°C à +50°C.

8. Dispositif selon la revendication 7, **caractérisé en ce que** la durée de décroissance de la luminescence de l'indicateur de température possède un coefficient de température dans la gamme allant de 5 à 100 ns par °C.

9. Dispositif selon l'une des revendications 1 à 8, **caractérisé en ce que** le capteur optique de température possèdent un rendement quantique de luminescence qui dépend de la température.

10. Dispositif selon l'une des revendications 1 à 9, **caractérisé en ce que** les moyens d'excitation de luminescence de l'indicateur de température comprennent au moins une diode à électroluminescence, et que les moyens pour mesurer le temps de décroissance de la luminescence comprennent au moins une photodiode et/ou que les moyens de liaison comprennent des fibres optiques.

11. Dispositif selon l'une des revendications 1 à 10, **caractérisé en ce que** l'indicateur de température est immobilisé dans une matrice solide, notamment une couche polymère optiquement transparente.

12. Dispositif selon l'une des revendications 1 à 11, **caractérisé en ce que** l'indicateur de température est renfermé dans un logement, notamment un logement microcapillaire.

13. Dispositif selon les revendications 1 à 12, **caracté-**

**risé en ce que** le capteur chimique est une optrode comportant un indicateur chimique optique.

14. Dispositif selon la revendication 13, **caractérisé en ce que** l'indicateur de température et l'indicateur chimique sont immobilisés dans des matrices solides différentes ou dans la même matrice solide.

15. Dispositif selon la revendication 14, **caractérisé en ce que** l'indicateur de température est dispersé dans une forme, inerte vis-à-vis du milieu de mesure, à l'intérieur de la matrice contenant l'indicateur chimique.

16. Procédé pour un dispositif pour la détermination à température compensée de paramètres chimiques, selon lequel on utilise un indicateur sensible à un paramètre chimique déterminé du milieu de mesure, en combinaison avec un indicateur de température luminescent, dans une large mesure insensible vis-à-vis de paramètres chimiques du milieu et qui évalue les signaux provenant des deux indicateurs, **caractérisé en ce**
**qu'**on utilise un indicateur optique de température, qui possède une durée de décroissance et/ou une intensité de la luminance, qui dépendent de la température.

17. Procédé selon la revendication 16, **caractérisé en ce qu'**on détermine un gaz, la valeur du pH ou des composés ioniques dissous.

18. Procédé selon la revendication 17, **caractérisé en ce qu'**on détermine le $O_2$.

19. Procédé selon l'une des revendications 16 à 18, **caractérisé en ce qu'**on utilise comme indicateur chimique une optrode.

20. Procédé selon l'une des revendications 16 à 19, **caractérisé en ce qu'**on exécute la détermination en présence de champs électromagnétiques.

21. Procédé selon l'une des revendications 16 à 20, **caractérisé en ce qu'**on exécute une détermination sur la base d'une surface.

Fig. 1

Fig. 2

EP 0 870 189 B1